# EUROPÄISCHE PATENTANMELDUNG

(11) **EP 2 060 491 A2**
(43) Veröffentlichungstag der Anmeldung: **20.05.2009**
(21) Anmeldenummer: 08169364.0
(22) Anmeldetag: 18.11.2008
(51) Int. Cl.: B64F 5/00

(54) **Vorrichtung zur Handhabung von Flugzeugbremsen**

(30) Priorität: 19.11.2007 DE 102007055358
(71) Anmelder: Lufthansa Engineering and Operational Services GmbH, 60546 Frankfurt (DE)
(72) Erfinder: Bilalic, Sanel, 60431 Frankfurt (DE); Breunig, Frank, 63165 Mühlheim (DE)
(74) Vertreter: Lieke, Winfried

(57) **Zusammenfassung**

Die vorliegende Erfindung betrifft eine Vorrichtung zur Handhabung von Flugzeugbremsen, wobei die Vorrichtung aufweist:
einen Ausleger (1) mit mindestens einem Aufhängpunkt (2) und einer um eine Schwenkachse (3) drehbaren und sich von dem Ausleger weg erstreckenden Welle (4),
einen an der Welle befestigten und sich unter einem Winkel (α) von in etwa 45° relativ zur Schwenkachse erstreckenden Aufnahmebolzen (5) für die Aufnahme in einer Bohrung einer Flugzeugbremse,
eine Fixiereinrichtung (6), welche an dem Aufnahmebolzen festgelegt ist für eine relativ zum Aufnahmebolzen verdrehsichere Halterung der an dem Aufnahmebolzen aufgehängten Flugzeugbremse,
wobei der Ausleger derart ausgestaltet und die Welle relativ zu dem mindestens einen Aufhängpunkt an dem Ausleger derart positioniert ist, daß bei einer über den Aufnahmebolzen und die Welle an dem Ausleger frei aufgehängten Flugzeugbremse sich die Schwenkachse der Welle unter einem Winkel (β) von in etwa 45° relativ zu einer Vertikalen erstreckt.
Um eine Vorrichtung zur Handhabung von Flugzeugbremsen zu schaffen, die nicht auf die Verwendung an einem einzigen Bremsentyp beschränkt ist, wird erfindungsgemäß vorgeschlagen, daß der Aufnahmebolzen (5) lösbar und austauschbar an der Welle befestigt ist.

## Beschreibung

Die vorliegende Erfindung betrifft eine Vorrichtung zur Handhabung von Flugzeugbremsen, welche folgende Merkmale aufweist:
einen Ausleger mit mindestens einem Aufhängpunkt und einer um eine Schwenkachse drehbaren und sich von dem Ausleger weg erstreckenden Welle,
einen an der Welle befestigten und sich unter einem Winkel von in etwa 45° relativ zur Schwenkachse erstreckenden Aufnahmebolzen für die Aufnahme in einer Bremsensicherungsbohrung einer Flugzeugbremse,
eine Fixiereinrichtung, welche relativ zu dem Aufnahmebolzen festgelegt ist für eine relativ zum Aufnahmebolzen verdrehsichere Halterung der an dem Aufnahmebolzen aufgehängten Flugzeugbremse,
wobei der Ausleger derart ausgestaltet und die Welle relativ zu dem mindestens einen Aufhängpunkt an dem Ausleger derart positioniert ist, daß bei einer über den Aufnahmebolzen und die Welle an dem Ausleger frei aufgehängten Flugzeugbremse sich die Schwenkachse der Welle unter einem Winkel von in etwa 45° relativ zu einer Vertikalen erstreckt.
Der Winkel der Schwenkachse zur Vertikalen muß nicht exakt 45° betragen, sollte aber aus praktischen Gründen in dem Bereich zwischen 40° und 50° liegen, wobei ein möglichst nahe bei dem Wert von 45° liegender Winkel angestrebt werden sollte. Dieser Winkel stellt sich im Allgemeinen nur ein, wenn die Vorrichtung mit der Bremse fest verbunden ist und das Gewicht der Bremse trägt. Ohne die Bremse verläuft die Schwenkachse der Vorrichtung im frei hängenden Zustand unter einem deutlich anderen Winkel zur Vertikalen, kann aber zum In-Eingriff-Bringen mit der Bremse ohne weiteres von Hand entsprechend ausgerichtet werden.

Eine entsprechende Vorrichtung zur Handhabung von Flugzeugbremsen, insbesondere für die Handhabung der Bremsen des Flugzeugtyps Airbus A 340/600 ist von der Firma Messier Services bekannt und lieferbar.

Es versteht sich, daß bei der relativ geringen Anzahl von Rädern eines Flugzeugfahrwerks und dem hohen Start- und Landegewicht von Flugzeugen derartige Bremsen extrem hohen Belastungen ausgesetzt sein können und daß Flugzeugbremsen sicherheitstechnisch einen hohen Stellenwert besitzen. Flugzeugbremsen des betreffenden Typs bestehen typischerweise aus einem Paket von Scheibenbremsen, genauer gesagt aus zwei Gruppen von im Abstand nebeneinander angeordneten und wechselseitig ineinander greifenden, scheibenförmigen Bremsenelementen, wobei Scheiben der einen Gruppe mit einem Rad bzw. der mit dem Rad drehenden Radachse und die Scheiben der anderen Gruppe mit dem Fahrgestell fest verbunden sind, wobei die verschiedenen Scheiben dieses ineinandergreifenden Scheibenpakets ohne Bremsbetätigung relativ zueinander in den Zwischenräumen bewegbar sind, die durch die beabstandeten Scheiben des jeweils anderen Typs gebildet werden, und wobei zur Betätigung der Bremsen diese relativ zueinander rotierenden Scheiben durch eine entsprechenden Hydraulikmechanismus hydraulisch zusammengepreßt werden, so dass sie aneinander reiben und dadurch die gewünschte Bremswirkung erzielen. Derartige Bremsenpakete wiegen typischerweise in der Größenordnung von 100 kg und mehr.

Wegen ihrer großen sicherheitstechnischen Bedeutung und wegen ihrer großen Belastung während des Betriebs unterliegen Flugzeugbremsen einer regelmäßigen sorgfältigen Überprüfung und Wartung innerhalb kurzer Zeitintervalle. Sofern an derartigen Flugzeugbremsen umfangreichere Wartungs- oder Reparaturarbeiten ausgeführt werden müssen, beispielsweise indem die rotierenden oder feststehenden Bremsscheiben, die Verschleißelemente sind, oder auch andere Bauteile ausgetauscht oder gewartet werden müssen, wird zur Vermeidung längerer kostspieliger Stillstandszeiten die betreffende Bremse an einem Flugzeug in der Regel komplett ausgetauscht, so daß für die Reparatur oder Wartung des teilweise verschlissenen oder zu reparierenden Bremsscheibenpakets entsprechend mehr Zeit zur Verfügung steht, ohne daß deshalb das komplette Flugzeug am Boden bleiben muß.

Es versteht sich, daß der Austausch entsprechender Flugzeugbremsen dementsprechend schnell und reibungslos erfolgen sollte, da ein schneller Bremsenwechsel auch die Stillstandszeit des Flugzeugs reduziert.

Wie bereit erwähnt, sind derartige Bremsenpakete relativ schwer und können ohne weiteres 100 kg und mehr wiegen, so daß sie ohne Zuhilfenahme entsprechender Gerätschaften und Maschinen von dem Wartungspersonal kaum bewegt bzw. aus- und eingebaut werden können. Das Bremsenpaket muß generell sehr vorsichtig gehandhabt werden, um Beschädigungen zu vermeiden. Vor allem ist zu vermeiden, daß die Bremse an anderen Bauteilen, wie zum Beispiel der Radachse, der Felge oder dem Fahrgestell anschlägt und derartige Bauteile dabei beschädigt oder selbst beschädigt wird.

Die vorliegende Erfindung betrifft eine Hilfsvorrichtung, die die Handhabung von entsprechenden Flugzeugbremsen erleichtert. Über den mindestens einen Aufhängpunkt wird der Ausleger der Vorrichtung typischerweise an dem Haken eines Krans oder einer Winde aufgehängt. Die Welle, an welcher ein eine Bolzenachse definierender Aufnahmebolzen vorgesehen ist, der sich unter einem Winkel von etwa 45° relativ zur Schwenkachse der Welle erstreckt, wird um diese Schwenkachse, die ihrerseits, wenn sie mit der Bremse in Eingriffsposition gebracht wird, einen Winkel von in etwa 45° mit einer Vertikalen einschließt, so gedreht, daß der Aufnahmebolzen bzw. die durch den Aufnahmebolzen definierte Bolzenachse in etwa horizontal verläuft. Dann wird der Ausleger mit der Welle und dem Aufnahmebolzen in Richtung der Bremse bewegt, bei welcher eine entsprechende Abdeckung und ein Sicherungsbolzen entfernt sind.

Dieser Sicherungsbolzen verhindert bei einer betriebsbereiten Bremse ein Mitdrehen der Bremse auf der Radachse. Dabei tritt gleichzeitig eine Fixiereinrichtung mit äußeren Elementen der Bremse in Eingriff und sichert so die Bremse gegen ein Verdrehen relativ zu dem Aufnahmebolzen. Diese Fixiereinrichtung besteht im Falle der bekannten Handhabungsvorrichtung aus zwei Verstellschrauben mit Gelenktellern, wobei diese Verstellschrauben sich parallel neben dem Aufnahmebolzen erstrecken und mit entsprechenden Aussparungen an dem bereits erwähnten Hydraulikblock der Bremse in Eingriff treten.

Die horizontale Ausrichtung des Aufnahmebolzens bzw. der Achse des Aufnahmebolzens erreicht man unter anderem dadurch, daß man den Ausleger derart ausrichtet, daß die Schwenkachse der Welle gegenüber einer Vertikalen um 45° geneigt ist. Aufgrund der Tatsache, daß auch die Achse des Aufnahmebolzens relativ zu der um die Schwenkachse drehbaren Welle um 45° geneigt ist, kann man bei der Ausrichtung der Schwenkachse unter 45° zur Vertikalen durch Drehen der Welle erreichen, daß die Achse des Aufnahmebolzens je nach Drehposition der Welle entweder in die horizontale oder in die vertikale Richtung weist. Die horizontale Position des Aufnahmebolzens ist die Ein- und Ausbauposition für die Bremse, da bei der an einem Rad bzw. Fahrgestell eines Flugzeugs montierten Bremse auch die Bremsensicherungsbohrung, in welche der Aufnahmebolzen eingreifen soll, in horizontaler Richtung (d. h. parallel zur Bremsen- bzw. Radachse) ausgerichtet ist. Um diese Ausrichtung der Schwenkachse zu erreichen, wird der Aufhängpunkt am Ausleger entsprechend gewählt, indem eine Bremse an der Vorrichtung bzw. einem entsprechenden Prototyp aufgehängt wird und der Aufhängpunkt in Längsrichtung des Auslegers so verschoben wird, daß sich dieser Winkel (45°) der Schwenkachse zur Vertikalen einstellt.

Alternativ kann man auch die Länge bzw. den effektiven Abstand des Aufnahmebolzens von der Schwenkachse variieren, um den gewünschten Winkel einzustellen. Im Idealfall ist aber der Aufnahmebolzen so bemessen und/oder positioniert, daß die Schwenkachse durch den Schwerpunkt der bezüglich des Auslegers um die Schwenkachse drehbaren Bauteile, einschließlich Bremse und Aufnahmebolzen, verläuft. In diesem Fall kann man, wie oben erwähnt, immer noch den Aufhängpunkt entsprechend variieren und für einen bestimmten Bremsentyp fest einstellen.

Geringe Abweichungen dieser idealen Schwerpunktslage sind jedoch tolerierbar und führen lediglich zu leichten Winkelkorrekturen bei der Ausrichtung von Aufnahmebolzen und Bremse bezüglich der idealerweise gewünschten exakt horizontalen oder exakt vertikalen Ausrichtung. Diese kleinen Fehlausrichtungen können von Hand kompensiert werden. Alternativ kann man eine solche Fehlausrichtung auch dadurch kompensieren, daß der Winkel zwischen der Achse des Aufnahmebolzens (die parallel zur Achse der Bremse Verläuft) und der Schwenkachse von 45° etwas abweicht. wobei dann auch die Schwenkachse nicht mehr exakt unter 45°, sondern einem hiervon abweichenden Winkel zu Vertikalen angeordnet ist, während dennoch durch Drehen um die Schwenkachse die Bremse im frei aufgehängten Zustand mit Ihrer Achse wahlweise exakt horizontal oder vertikal ausgerichtet ist. Dies führt jedoch zu einer Taumelbewegung (Änderung der Lage und des Winkels der Schwenkachse) beim Übergang von der einen in die andere Position der Bremse, die um so ausgeprägter wird, je mehr die obigen Winkel von dem 45°-Wert abweichen und je weiter der Schwerpunkt der um die Schwenkachse drehbaren Teile von der Schwenkachse beabstandet ist.

Der entsprechend ausgerichtete Aufnahmebolzen der an einem Kran oder einer Winde aufgehängten Vorrichtung wird dann in die Bremsensicherungsbohrung der Flugzeugbremse eingeführt und daran gesichert. Durch Betätigen der Winde bzw. des Krans wird dann der Ausleger mit der daran über die Welle und den Aufnahmebolzen aufgehängten Bremse geringfügig angehoben, und zwar soweit, daß die Bremse axial aus einem entsprechenden Rad, Fahrgestell oder Bremsengehäuse, in welchem sie mit gewissem radialen Spiel aufgenommen ist, leicht herausgezogen werden kann. Dabei ist der Aufhängpunkt relativ zum Aufnahmebolzen und der den Aufnahmebolzen tragenden Welle so positioniert, daß der Schwerpunkt des Gesamtsystems bei einem horizontal ausgerichteten Aufnahmebolzen ziemlich genau vertikal unterhalb des Aufhängpunktes des Auslegers liegt. Die Bremse bleibt daher mit ihrer Bremsenachse ebenfalls in horizontaler Richtung ausgerichtet, wenn sie mit ihrem vollen Gewicht an dem Ausleger hängt und in das Rad oder Fahrgestell eingebaut bzw. aus diesem ausgebaut wird. (Dies ist gleichbedeutend mit der bereits diskutierten Bedingung, daß die Schwenkachse sich in diesem Zustand unter 45° zur Vertikalen erstrecken soll).

Die äußeren Umfangselemente der Bremse müssen jedoch gegen Beschädigungen und Belastungen geschützt werden, so daß die Bremse nicht seitlich auf ihren äußeren Umfangselementen abgelegt werden darf. Bei der beschriebenen Vorrichtung ist es jedoch möglich, die drehbare Welle, welche den Aufnahmebolzen mit dem Ausleger verbindet, um 180° zu drehen, was bedeutet, daß der horizontal ausgerichtete Aufnahmebolzen, der mit der Bremse fest verbunden ist, nunmehr in vertikaler Richtung ausgerichtet wird und damit auch die Bremse aus einer Position, in welcher deren Achse horizontal ausgerichtet ist, in eine Position dreht, in welcher die Bremsenachse vertikal ausgerichtet ist. In dieser Position kann die Bremse auf dem Boden bzw. einer entsprechenden Unterlage abgelegt oder verpackt werden.

Aus der vorstehenden Beschreibung ergibt sich, daß Ausleger, Welle und Aufnahmebolzen sehr genau auf die betreffende Bremse abgestimmt sein müssen, damit sich die Bedingung ergibt, daß bei einer frei an der Vorrichtung aufgehängten Bremse und horizontal ausgerichtetem Bolzen der Schwerpunkt des Systems ziemlich genau vertikal unter dem Aufhängpunkt liegt. Es versteht sich, daß dies zumindest im wesentlichen auch noch dann gelten muß, wenn die Bremse in die Position verkippt ist, in welcher ihre Achse im wesentlichen vertikal ausgerichtet ist.

Daraus ergibt sich, daß die betreffende Vorrichtung im allgemeinen nur für einen einzigen Bremsentyp geeignet ist, an dessen Maße und Gewicht die entsprechende Handhabungsvorrichtung angepaßt ist.

Gegenüber diesem Stand der Technik liegt der vorliegenden Erfindung die Aufgabe zugrunde, eine Vorrichtung zur Handhabung von Flugzeugbremsen zu schaffen, die nicht auf die Verwendung an einem einzigen Bremsentyp beschränkt ist.

Diese Aufgabe wird durch eine Vorrichtung mit den Merkmalen des Anspruchs 1 gelöst, welcher die oben bereits erwähnten Merkmale sowie das zusätzliche Merkmal aufweist, daß der Aufnahmebolzen lösbar und austauschbar an der Welle befestigt ist. Es hat sich nämlich gezeigt, daß auch ohne Veränderung der übrigen Maße der eingangs genannten Handhabungsvorrichtung allein durch entsprechende Ausgestaltung und Anpassung des Aufnahmebolzens die Bedingungen für eine ordnungsgemäße Handhabung auch verschiedener Bremsentypen erfüllt werden können. Da unterschiedliche Bremsentypen typischerweise auch unterschiedliche Maße der Bremsensicherungsbohrungen haben, müssen selbstverständlich die Durchmesser der entsprechenden Bolzen entsprechend angepaßt sein. Darüber hinaus kann der Aufnahmebolzen auch in seiner Längsrichtung so angepaßt werden, daß er einerseits an der Welle befestigt werden kann und sich dabei unter einem Winkel von in etwa 45° relativ zur Schwenkachse der Welle erstreckt, andererseits aber der in die Sicherungsbohrung der Bremse eingreifende Teil des Aufnahmebolzens so bemessen und angeordnet ist, daß die obige Bedingung für den Schwerpunkt des Gesamtsystems bei horizontal ausgerichtetem Bolzen nach wie vor erfüllt ist.

Es versteht sich, daß der Aufnahmebolzen nicht notwendigerweise ein zylindrischer Bolzen sein muß, sondern beispielsweise auch ein länglicher (prismatischer) Körper mit einem weitgehend beliebigen Querschnitt sein kann, der auch für sich so ausgestaltet ist, daß er aufgrund seiner nichtzylindrischen äußeren Oberfläche die in eine entsprechend geformte Sicherungsbohrung der Bremsscheiben eingreift, in sich eine Fixiereinrichtung bildet. Auf jeden Fall definiert der Aufnahmebolzen aufgrund seiner zylindrischen oder zumindest prismatischen Form eine Achse bzw. eine axiale Richtung.

Zur axialen Sicherung der Flugzeugbremse an dem Aufnahmebolzen ist gemäß einer Ausführungsform der Erfindung eine Sicherungshülse mit Querstift am freien Ende des Aufnahmebolzens vorgesehen. Der Bolzen ist dabei so gestaltet, daß er von der Außenseite der Bremse her in die Sicherungsbohrung eingeführt wird und sich am anderen Ende des die Sicherungsbohrung aufweisenden Abschnitts aus der Sicherungsbohrung heraus erstreckt, wobei auf dieses herausstehende Ende dann die Sicherungshülse aufgeschoben und durch einen sich quer durch die Sicherungshülse und eine entsprechende Querbohrung in dem freien Ende des Aufnahmebolzens hindurch erstreckenden Querstift gesichert wird. Die Sicherungshülse könnte alternativ auch auf ein gegebenenfalls am Ende des Sicherungsbolzens vorgesehenes Gewinde aufgeschraubt oder durch eine auf ein überstehendes Gewindeende des Sicherungsbolzens aufgeschraubte Mutter gesichert werden.

Zur Erleichterung des Wechsels eines entsprechenden Aufnahmebolzens ist gemäß einer Ausführungsform der Erfindung an der Welle eine Bolzenhalterung mit einer Aussparung für die Aufnahme und Sicherung einer dem freien Ende des Bolzens abgewandten Bolzenverlängerung vorgesehen. Diese Bolzenverlängerung kann unabhängig von der Form und den Maßen des eigentlichen Aufnahmebolzens selbst immer die gleiche Querschnittsform aufweisen, so daß die Bolzenverlängerungen unterschiedlicher Bolzen jeweils in derselben Aussparung der Bolzenhalterung aufgenommen und befestigt werden können. Auch in diesem Fall kann die Sicherung des Bolzens bzw. der Bolzenverlängerung wieder durch einen Sicherungsstift bzw. Querstift erfolgen, der sich quer durch eine Wand der Aussparung bzw. der Bolzenhalterung und eine damit fluchtende Bohrung in der Bolzenverlängerung erstreckt.

Weiterhin ist gemäß einer Ausführungsform der Erfindung vorgesehen, daß die Welle in mindestens einer Drehposition fixierbar ist.

Es hat sich nämlich herausgestellt, daß die vertikale Position des Schwerpunkts des Gesamtsystems (unabhängig von einer vertikalen Bewegung des Aufhängpunktes) während der Drehung der Bremse von der Einbauposition (horizontale Bremsachse) in die Ablageposition (vertikale Bremsachse) variieren kann und daß weder die horizontale Einbauposition noch die vertikale Ablageposition die Positionen mit der niedrigsten Schwerpunktlage definieren müssen oder aber jeweils eine zu benachbarten Positionen relativ niedrigere Schwerpunktlage definieren. Dies bedeutet, daß die an der Vorrichtung aufgehängte Bremse dann, wenn die Welle nicht fixiert ist und beispielsweise die horizontale Einbauposition nicht die Position mit der tiefsten Schwerpunktlage ist, die Bremse plötzlich aus dieser Position heraus in eine tiefere Schwerpunktlage kippen kann, wobei die Welle sich entsprechend mitdreht. Abhängig von der Form und den Maßen der Bremse und der genauen Position der Bremsensicherungsbohrung kann dies auch umgekehrt geschehen, wenn die Bremse sich in der Ablageposition befindet, oder wenn sie während des Verdrehens von der Ablageposition in die Einbauposition oder umgekehrt über eine höchste Position des Schwerpunkts hinweg bewegt wird,
wobei dieses Anheben des Schwerpunkts einer anfänglichen Drehung der Bremse um die Wellenachse einen gewissen Widerstand entgegensetzt, der nach Überschreiten des Höchstpunktes in eine entgegengesetzte Kraft umschlägt, die zu einer plötzlichen und unter Umständen überraschenden Weiterdrehung der Bremse um die Achse der Welle führt. Bei solchen unbeabsichtigten Drehbewegungen können leicht Unfälle geschehen, die zu Verletzungen von Personen oder zur Beschädigung von Gegenständen und insbesondere der Bremse selbst führen können.

Aus diesem Grund ist es zweckmäßig, wenn eine bestimmte Position der Bremse, insbesondere die Einbauposition und vorzugsweise zusätzlich auch die Ablageposition durch Fixierung der Welle gesichert werden kann. Selbstverständlich können auch andere Positionen fixierbar sein.

Zu diesem Zweck ist gemäß einer Ausführungsform der Erfindung ein Fixierbolzen vorgesehen, der durch eine Öffnung in der Wand einer entsprechenden Wellenbuchse mit der Welle in Fixiereingriff bringbar ist.

Ohne Beschränkungsabsicht soll hierbei das die Welle aufnehmende Bauteil, das eine innere zylindrische Öffnung hat, deren Durchmesser dem der Welle entspricht, als "Buchse" bezeichnet werden,
wobei diese Buchse eine entsprechende Querbohrung aufweist, durch die sich der erwähnte Fixierbolzen erstreckt. Der Fixierbolzen ist in einer an dem Ausleger bzw. an der mit dem Ausleger fest verbundenen Buchse befestigten Fixierbolzenführung gehaltert, wobei diese Fixierbolzenführung weitgehend auch schon durch die in der Wand der Buchse vorgesehene Bohrung gebildet wird. Der Fixierbolzen kann mit der Welle entweder in reibschlüssigem Klemmeingriff oder in einen mehr oder weniger formschlüssigen Rasteingriff treten. Zur Erzielung eines reibschlüssigen Klemmeingriffs wäre der Bolzen zweckmäßigerweise als Gewindebolzen auszuführen, der in einem entsprechenden Gewinde in der Querbohrung der Buchse bzw. der Fixierbolzenführung aufgenommen wäre, wobei der Fixierbolzen durch Einschrauben in das Gewinde mit Welle in Klemmeingriff gebracht werden kann. Der Kopf des Fixierbolzens könnte dazu mit einem geeigneten Gelenkteller beweglich verbunden sein.

In einer alternativen Ausführungsform weist die Welle in dem axialen Abschnitt, in welchem der Fixierbolzen vorgesehen ist, Abflachungen oder Vertiefungen auf, an bzw. in welchen der Fixierbolzen bzw. dessen freies Ende eingreifen kann. Bei einem solchen mehr oder weniger formschlüssigen Eingriff kann der Bolzen zwar auch über ein Gewinde in Richtung auf die Welle zu und von dieser weg bewegt werden, er kann jedoch zweckmäßigerweise auch in Richtung der Welle federnd vorgespannt sein, wobei ein entsprechender Nocken- oder Hebelmechanismus dazu dienen kann, den Fixierbolzen gegen die Kraft der Feder mit der Welle außer Eingriff zu bringen. Insbesondere kann der Fixierbolzen als Sperriegel ausgebildet sein und durch eine Feder in Richtung des Eingriffs mit der Welle (4) vorgespannt sein.

Die Welle kann im übrigen an der Wellenbuchse in ähnlicher Weise gesichert werden, wie der Aufnahmebolzen an der Bolzenhalterung oder in der Bremsensicherungsbohrung gesichert wird, nämlich durch eine an dem von dem Aufnahmebolzen abgewandten Ende der Welle angeordnete Sicherungshülse und einen sich durch eine Bohrung der Sicherungshülse und des betreffenden Endes der Welle erstreckenden Querstift.

Gemäß einer Ausführungsform der vorliegenden Erfindung ist auch die Fixiereinrichtung, welche die Bremse gegen eine Drehung um die Achse des Aufnahmebolzens sichert, eine verstellbare Fixiereinrichtung, die auf diese Weise an unterschiedliche Bremsentypen und äußere Maße von Bremsenelementen anpaßbar ist.

Gemäß einer besonderen Ausführungsform der vorliegenden Erfindung besteht eine solche Fixiereinrichtung aus einer Traverse und an den Endabschnitten der Traverse angeordneten Verstellschrauben, die auf äußere Bremsenelemente ausgerichtet sind, mit denen sie zur Fixierung der Bremse an dem Aufnahmebolzen in Eingriff gebracht werden. Die Verstellschrauben weisen zu diesem Zweck in einer Ausführungsform der Erfindung Gelenkteller für den unmittelbaren Eingriff mit den äußeren Bremselementen auf, wobei diese Gelenkteller sich der äußeren Form entsprechender Bremselemente besser anpassen können und wobei diese Gelenkteller insbesondere auch aus einem Kunststoffmaterial oder aus einem mit Kunststoff beschichteten Metallteil bestehen können, um irgendwelche Beschädigungen der äußeren Bremsenelemente durch den Eingriff mit den Gelenktellern bzw. Verstellschrauben zu vermeiden.

Des weiteren ist eine Ausführungsform der Erfindung vorgesehen, bei welcher an dem Ausleger eine Halteeinrichtung für einen zweiten Aufnahmebolzen vorgesehen ist, wobei dieser Bolzen zweckmäßigerweise ebenfalls eine Bolzenverlängerung hat, die in die gleiche Aussparung der Bolzenhalterung paßt, in welcher auch der erste Bolzen aufgenommen ist. Es versteht sich für den Fall, daß der erste Bolzen nicht über eine Bolzenverlängerung sondern auf andere Weise an der Bolzenhalterung befestigt ist, die entsprechenden Elemente auch an dem zweiten Aufnahmebolzen in gleicher Weise vorgesehen sind.

Die Halteeinrichtung für den zweiten Bolzen ist zweckmäßigerweise an der Oberseite des Auslegers vorgesehen, wo ein gegebenenfalls gehalterter zweiter Bolzen die Bewegung und Arbeit der übrigen Elemente, insbesondere die Drehbewegung der Welle mit dem Aufnahmebolzen und der daran aufgehängten Bremse, nicht stört.

Der zweite Bolzen ist gemäß einer Ausführungsform der Erfindung für die Aufnahme in einer Bremsensicherungsbohrung vorgesehen, deren Maße von denen der Bremsensicherungsbohrung abweichen, für 'welche der erste Bolzen vorgesehen ist. D.h., der zweite Bolzen dient für die Halterung und Aufnahme eines anderen Bremsentyps. Da aber die Fixiereinrichtung für die Drehsicherung der Bremse an dem Aufnahmebolzen verstellbar ist, kann auch diese so angepaßt werden, daß sie Bremsen verschiedenen Typs gegen Verdrehung an dem Aufnahmebolzen sichert.

Des Weiteren ist eine Ausführungsform der Erfindung vorgesehen, bei welcher ein zweiter Aufhängpunkt an dem Ausleger vorgesehen ist, vorzugsweise in einem zu dem mindestens einen ersten Aufhängpunkt unterschiedlichen Abstand zu einer Vertikalen, die beispielsweise durch den Schnittpunkt von Wellenachse und Achse des Aufnahmebolzens verläuft. Wird ein solcher zweiter Aufhängpunkt vorgesehen, so können sowohl der erste Aufhängpunkt als auch der zweite Aufhängpunkt so angeordnet werden, daß sich bei verschiedenen Bremsentypen der Schwerpunkt der aufgehängten Bremse auf jeden Fall immer zwischen den beiden Aufhängpunkten befindet, wobei es aber durchaus zugelassen ist, daß bei verschiedenen Bremsentypen der Schwerpunkt des Gesamtsystems an einer beliebigen Position und vertikal unterhalb einer den ersten und den zweiten Aufhängepunkt verbindenden Linie liegt. IN einer Ausführungsform ist vorgesehen, dass der mindestens eine Aufhängpunkt an dem Ausleger verstellbar angeordnet ist

Beide Aufhängpunkte können auch über ein bewegliches Element, wie zum Beispiel ein Seil oder eine Kette, aber auch über eine mit entsprechenden Ösen oder Schäkeln versehene Zugstange mit einem gemeinsamen zentralen oberen Aufhängpunkt verbunden sein. Dabei kann die Länge der Seite, Ketten bzw. Zugstangen relativ zueinander so abgestimmt werden, daß die Achse der Welle, wenn die Vorrichtung an den beiden Aufhängpunkten aufgehängt ist, unter einem Winkel α von 45° relativ zur Vertikalen ausgerichtet ist. Auf diese Weise wird sichergestellt, daß gleichzeitig auch der Aufnahmebolzen bei entsprechender Drehung der Welle immer eine exakt horizontale oder eine exakt vertikale Ausrichtung einnehmen kann. Insbesondere vermeidet man dadurch auch stärkere Schaukelbewegungen der gesamten Vorrichtung um den Aufhängpunkt während des Drehens der Bremse aus der Ablageposition in die Einbauposition oder umgekehrt.

Grundsätzlich wäre es im übrigen auch möglich, den Ausleger an einem Ende auch noch mit einem Querträger zu versehen, an dessen Enden zweite und dritte Aufhängpunkt angeordnet wären, so daß drei an dem Ausleger vorgesehene Aufhängpunkte ein Dreieck aufspannen und damit die Lage des Auslegers und der gesamten Vorrichtung noch besser stabilisieren würden.

Zweckmäßigerweise sollte die gesamte Vorrichtung jedoch immer um eine vertikale Achse drehbar sein, die sich notwendigerweise durch den Hauptaufhängpunkt bzw. im Fall nur eines einzigen Aufhängpunktes durch diesen einen Aufhängpunkt erstreckt. Dies ist bei Winden oder Kränen mit einem entsprechenden drehbaren Haken ohne weiteres in einfacher Weise erreichbar, wobei eine Drehung der gesamten Vorrichtung um insgesamt 360° um eine vertikale Achse für praktische Zwecke völlig ausreichend ist.

Unabhängig davon und zur Minimierung der beim Verdrehen der Bremse an der Vorrichtung auftretenden Kräfte oder Drehmomente kann gemäß einer Ausführungsform die Bolzenhalterung derart an der Welle angeordnet sein, dass sich die Achse der Welle exakt oder zumindest näherungsweise durch den Schwerpunkt des an dem Aufnahmebolzen aufgehängten Bremsenpaketes (einschließlich Bolzen und Bolzenhalterung) erstreckt. Zu diesem Zweck können die Aufnahmebolzen für verschiedene Bremsentypen eine von den Maßen der Sicherungsbohrung unabhängige, unterschiedliche Länge haben, indem sie beispielsweise einen längeren oder kürzeren Bund zwischen Bolzenverlängerung und dem eigentlichen Aufnahmeabschnitt des Bolzens haben, der sich in die Sicherungsbohrung erstreckt. Im Idealfall erreicht man durch eine solche Anpassung der Aufnahmebolzen für verschiedene Bremsentypen in Verbindung mit einer entsprechenden Anordnung der Bolzenhalterung an der Welle, dass die Achse der Welle bzw. deren gedachte Verlängerung genau oder fast genau durch den Schwerpunkt der aus Welle, Bolzenhalterung, Aufnahmebolzen und Bremse bestehenden, um die Achse der Welle drehbaren Baugruppe verläuft. Dies wiederum bedeutet, dass sich während des Drehens der Bremse von der Einbau- in die Ablageposition die Lage des Schwerpunktes nicht verändert, da die Drehachse durch den Schwerpunkt verläuft, so dass in keiner Lage bzw. Drehposition irgendwelche durch die Schwerkraft bedingte Drehmomente auf die Vorrichtung bzw. die erwähnte Baugruppe wirken und damit eine besonders sichere und leichte Handhabung gewährleistet ist.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine perspektivische Ansicht der erfindungsgemäßen Handhabungsvorrichtung,
- Figur 2: eine Seitenansicht der erfindungsgemäßen Vorrichtung mit vertikal ausgerichtetem Aufnahmebolzen,
- Figur 3: eine Vorderansicht (entsprechend einer Ansicht von rechts auf Figur 2) der erfindungsgemäßen Vorrichtung,
- Figur 4: schematisch eine an der erfindungsgemäßen Vorrichtung aufgehängte Flugzeugbremse in einer (horizontalen) Einbauposition,
- Figur 5: wiederum schematisch die erfindungsgemäße Vorrichtung mit einer daran aufgehängten Bremse in einer (vertikalen) Ablageposition und

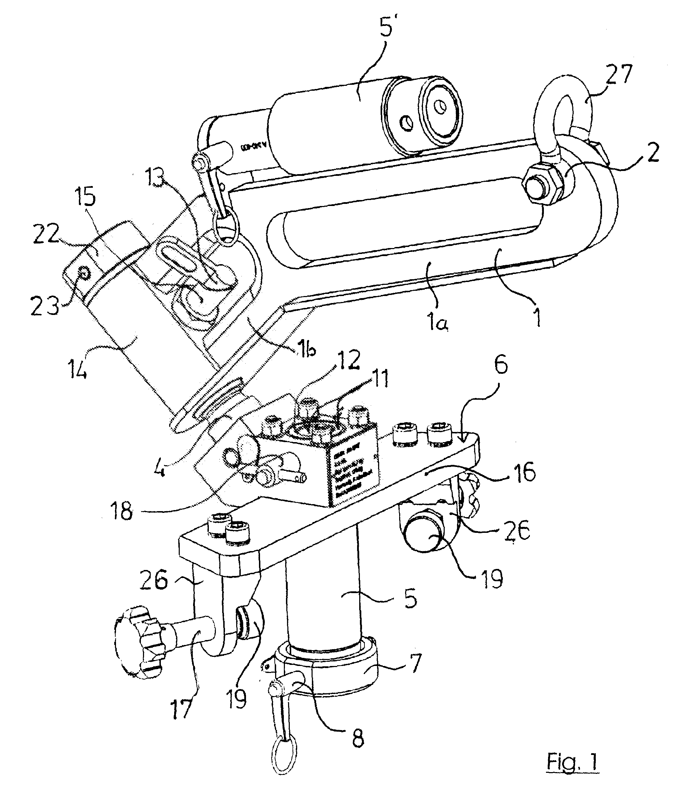

Man erkennt in Figur 1 in einer perspektivischen Ansicht einen Ausleger 1 in Form eines Bügels, der aus zwei zueinander leicht abgewinkelten, Schenkeln oder Bügelabschnitten 1a, 1b besteht, wobei an einem Ende des Auslegers oder Bügels 1 ein Schäkel 27 vorgesehen ist, dessen Achse einen ersten Aufhängpunkt 2 definiert. Das andere Ende des Auslegers 1 in Form eines abgewinkelten Bügels ist mit einer Aufnahmebuchse 14 für eine Welle 4 fest verbunden, die sich senkrecht zu dem abgewinkelten zweiten Abschnitt 1b des Auslegers 1 erstreckt. Die Achse 3 der Aufnahmebuchse 14 (die auch die Achse der Welle 4 ist) verläuft dabei in einer vertikalen Längsmittelebene durch den Ausleger 1. An dem oberen, rückwärtigen Ende der Welle 4 ist eine Fixierhülse 22 vorgesehen, welche das dort aus der Aufnahmebuchse 14 hervorstehende Ende der Welle 4 umgreift und über einen Querstift 23, der sich durch miteinander fluchtende Bohrungen in der Hülse 22 und dem Ende der Welle 4 erstreckt, gegen eine axiale Bewegung (in zumindest einer Richtung) in der Aufnahmebuchse 14 gesichert ist. Das untere Ende der Welle 4 ist mit einer Bolzenhalterung 10 fest verbunden, die eine zylindrische Aussparung 11 für die Aufnahme der Bolzenverlängerung 12 eines Aufnahmebolzens 5 versehen ist. Auch in diesem Fall ist der Bolzen 5 bzw. die Bolzenverlängerung 12 durch einen Querstift 18 an der Bolzenhalterung 10 gesichert, indem der Querstift 18 sich durch eine Querbohrung in der Wand der Bolzenhalterung und eine damit fluchtende Querbohrung in der Bolzenverlängerung 12 erstreckt. Es versteht sich, daß derartige Sicherungsstifte zusätzlich durch einen Splint an ihrem in Figur 1 nicht erkennbaren Ende gesichert sein können.

Der Aufnahmebolzen 5 hat die Form eines Zylinders mit einem Durchmesser, der dem Durchmesser einer Bremsensicherungsbohrung entspricht, wobei dieser Durchmesser sich im allgemeinen von dem Durchmesser der Bolzenverlängerung unterscheidet, aber auch zufällig mit dieser zusammenfallen kann.

Das untere, freie Ende des in Figur 1 vertikal ausgerichteten Aufnahmebolzens 5 weist wiederum eine Sicherungshülse 7 auf, die in der bereits mehrfach beschriebenen Weise über Querbohrungen in der Hülse 7 und dem freien Ende des Aufnahmebolzens 5 und einen sich da hindurch erstreckenden Querstift 8 gesichert ist. Mit der Bolzenhalterung und damit indirekt auch mit dem Aufnahmebolzen 5 ist gleichzeitig eine Fixiereinrichtung 6 fest verbunden, die aus einer Quertraverse 16 besteht, die sich quer zur Achse des Aufnahmebolzens 5 erstreckt und die in der Nähe ihrer freien Enden zwei Halteschenkel 26 aufweist, die ihrerseits sich in einer zur Achse des Aufnahmebolzens 5 senkrechten Ebene erstreckende Gewindebohrungen aufweisen, die jeweils eine Verstellschraube 17 aufnehmen, deren vorderes Ende mit einem Gelenkteller 19 ausgestattet ist. Das rückwärtige Ende der Verstellschrauben 17 weist jeweils einen von Hand zu betätigenden Drehknopf zum Verdrehen der Verstellschraube 17 auf.

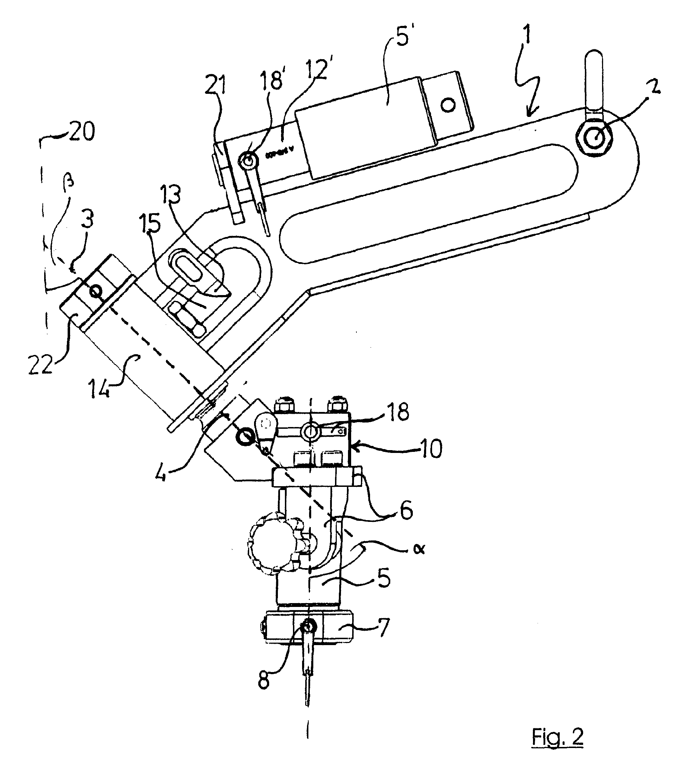

In Figur 2 erkennt man in einer Seitenansicht den Verlauf der Schwenkachse 3 relativ zu einer Vertikalen 20 in der erfindungsgemäß angestrebten Position, in welcher der Winkel β zwischen der Achse 3 und der Vertikalen 20 in etwa 45° beträgt. Weiterhin erkennt man in Figur 2, daß auch der Winkel α zwischen der Schwenkachse 3 der Welle 4 und der Achse 25 des Aufnahmebolzens 5 etwa 45° beträgt, wobei die Aufnahmeeinrichtung 10, welche über die Aufnahmebohrung 11 der Bolzenverlängerung 12 die Achse 25 definiert, drehfest mit dem unteren Ende der Welle 4 verbunden ist.
Wie man anhand der Figuren 1 und 2 erkennen kann, führt eine Drehung der Welle 4 um ihre Schwenkachse 3 um 180° dazu, daß die Achse 25 des Aufnahmebolzens 5 statt in vertikaler Richtung in horizontaler Richtung ausgerichtet ist. Dies definiert die Ein- bzw. Ausbauposition der erfindungsgemäßen Vorrichtung bzw. der über den Aufnahmebolzen 5 daran aufgehängten Flugzeugbremse.

Man erkennt in den Figuren 1 bis 3 außerdem einen Sperriegel 13, welcher durch eine Öffnung der Wand in der Wellenbuchse mit der Außenseite der Welle 4 in Eingriff bringbar ist. Die Außenfläche der Welle 4 weist an der axialen Position des Sperriegels 13 zweckmäßigerweise eine oder mehrere Rastvertiefungen auf, wobei mindestens eine Rastvertiefung in einer Position vorgesehen sein sollte, die einer Drehposition der Welle 4 entspricht, in welcher die Achse 25 des Aufnahmebolzens 5 entweder horizontal oder vertikal ausgerichtet ist, vorzugsweise sollte die Verrastung in beiden Ausrichtungen möglich sein. Der Sperriegel 13 kann durch eine in den Figuren nicht dargestellte Feder in Eingriff mit der Welle 4 vorgespannt sein, wobei eine Führungshülse 15 an ihrem oberen freien Ende eine bezüglich der Achse des Sperriegels 13 in axialer und in Umfangsrichtung verlaufende Nockenfläche aufweist, so daß ein sich senkrecht zu dem Sperriegel 13 erstreckender Betätigungshebel auf dieser Nockenfläche auflaufen kann, so daß durch eine Verschwenkung dieses Hebels um die Achse des Sperriegels 13 der Sperriegel gegen die Kraft der Vorspannfeder mit der Welle bzw. einer entsprechenden Rastvertiefung in der Welle außer Eingriff gebracht werden kann.

Der Sperriegel 13 könnte aber beispielsweise auch ein Gewinde aufweisen und durch Drehung in einem entsprechenden Gewinde der Führungshülse 15 mit der Außenfläche bzw. den Rastvertiefungen der Welle 4 in und außer Eingriff gebracht werden.

An der Oberseite des Auslegers 1 in Form eines abgewinkelten Bügels ist außerdem an dem Bügelabschnitt 1a eine Halterung 21 für einen zweiten Aufnahmebolzen 5' vorgesehen. Es versteht sich, daß sowohl die Aufnahmebolzen 5, 5' als auch die Welle 4 nicht notwendigerweise Massivbauteile sein müssen, sondern im allgemeinen aus Rohren hergestellte hohle Bauteile sind, um ihr Gewicht zu reduzieren und die Handhabung zu erleichtern. Demzufolge ist, wie man auch in Figur 1 erkennt, der Aufnahmebolzen 5 und auch der Aufnahmebolzen 5' als Hohlteil bzw. als Rohr ausgebildet mit Abschnitten, die einen unterschiedlichen Durchmesser haben können, wobei die Halteeinrichtung 21 zum Beispiel einen Zapfen (der ebenfalls rohrförmig sein kann) aufweist, der in das Innere der Bolzenverlängerung 12' eingreift und wiederum analog zu der Sicherung der Bolzenverlängerung 18 durch einen Querstift 18' an der Halteeinrichtung 21 befestigt sein kann.

Es versteht sich, daß der mit der Bremsensicherungsbohrung in Eingriff tretende Abschnitt des Aufnahmebolzens 5' in seinem Durchmesser und auch in seiner Länge von dem entsprechenden Durchmesser und der Länge des Aufnahmebolzens 5 abweichen kann, da der Aufnahmebolzen 5' im allgemeinen für die Aufnahme eines anderen Bremsentyps vorgesehen ist als der Aufnahmebolzen 5. Die Bolzenverlängerungen 12 und 12' sind jedoch jeweils identisch ausgebildet und können demzufolge in derselben Bolzenhalterung 10 als auch an derselben Halteeinrichtung 21 aufgenommen werden.

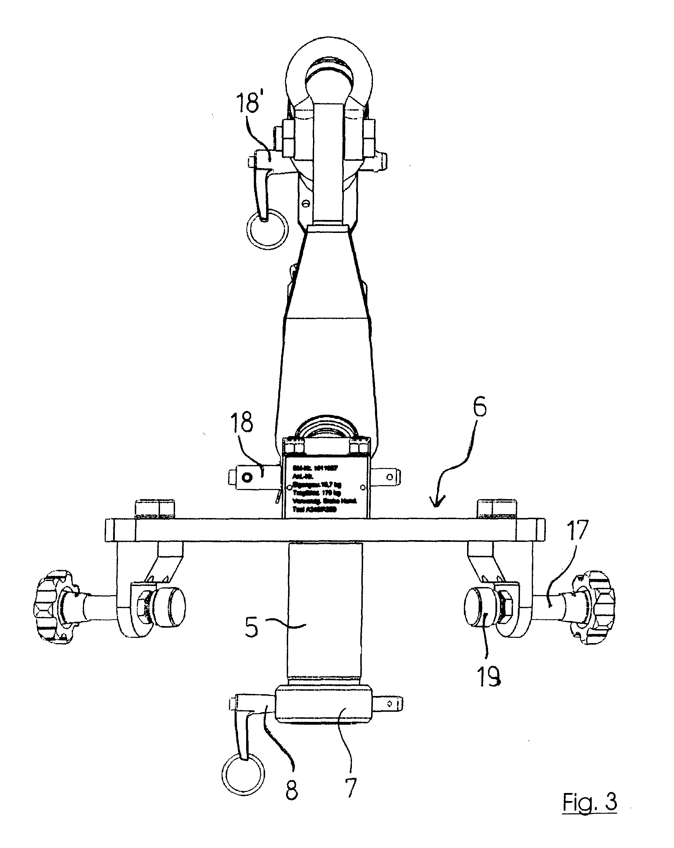

In Figur 3 erkennt man die bereits in Verbindung mit den Figuren 1 und 2 beschriebenen Elemente der erfindungsgemäßen Vorrichtung in einer Ansicht von vorne, d.h. in einer Ansicht, die einer Sicht auf den in Figur 2 dargestellten Gegenstand von rechts entspricht. In dieser Darstellung sind insbesondere die Querstifte 8, 18 und 18' und auch die Verstellschrauben 17 der Fixiereinrichtung zusammen mit den übrigen Elementen der Fixiereinrichtung 6 besser erkennbar.

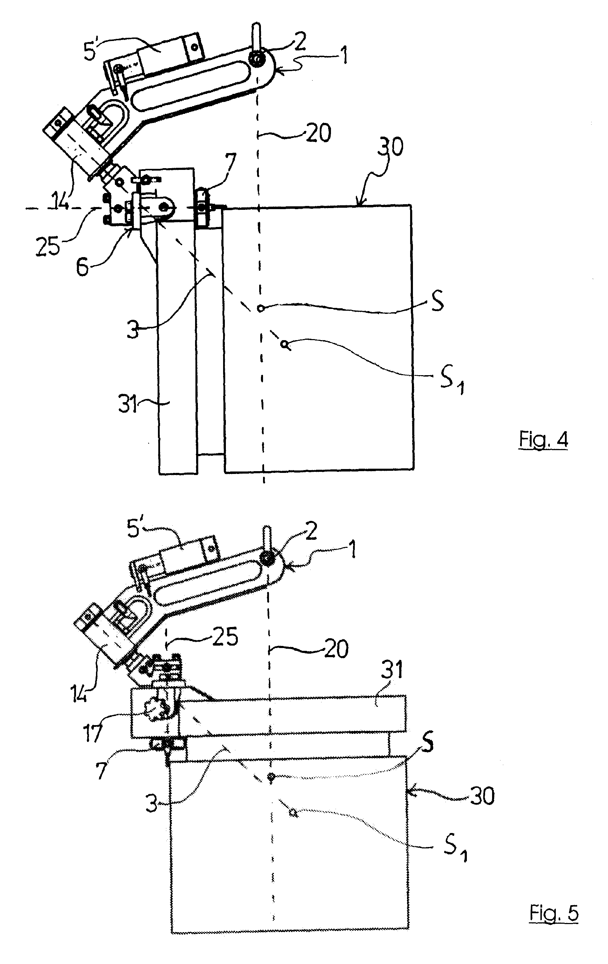

Figur 4 zeigt die erfindungsgemäße Vorrichtung mit einer daran aufgehängten Bremse 30 in einer Einbauposition. Der links erkennbare ring- bzw. scheibenförmige Abschnitt 31, der die Bremsensicherungsbohrung aufweist, in welcher der Aufnahmebolzen 5 aufgenommen ist, enthält auch die hydraulische Anpreßvorrichtung (Hydraulikblock) für das Zusammendrücken der relativ zueinander rotierenden Scheiben des Scheibenbremsenpakets, und er enthält mindestens eine Scheibe oder einen sich radial erstreckenden Sicherungsbügel, der mit den feststehenden Scheiben des Bremsscheibenpaketes fest verbunden ist und die Sicherungsbohrung aufweist, die der Aufnahmebolzen während des Transportes und der Handhabung der Bremse durchgreift. Der Aufnahmebolzen 5 ist mit seinem diesen Abschnitt 31 der Bremse durchdringenden Ende über die Sicherungshülse 7 gesichert. Die Verstellschrauben 17 greifen außerdem an der Außenseite dieses äußeren Rings der Bremse an und fixieren damit die gesamte Bremse relativ zu dem Aufnahmebolzen auch bezüglich dessen Achse 25.

Figur 5 zeigt dieselbe Vorrichtung mit derselben Bremse nach einer Drehung der Welle 4 um ihre Achse 3 um 180°. Wegen der Abwinkelung der Achse 25 des Aufnahmebolzens 5 bezüglich der Schwenkachse 3 um 45°, entspricht die Drehung der Bremse 30 um 180° um die Schwenkachse einer kombinierten Drehbewegung um eine vertikale Achse um 180° und um eine horizontale Achse um 90°. In der danach erreichten Endposition, die in Figur 5 dargestellt ist, verläuft die Achse 25 des Aufnahmebolzens 5 in vertikaler Richtung, und die Bremse 30 kann auf ihrer unteren Stirnseite abgelegt werden.

Gemäß der dargestellten, bevorzugten Ausführungsform sind die Positionen des Aufnahmebolzens 5 und der Bremse 30 auf dem Aufnahmebolzen 5 dabei bezüglich der Schwenkachse 3 so gewählt, daß der Schwerpunkt S₁ der Bremse 30 (einschließlich der mit der Bremse 30 um die Achse 30 drehbaren Teile der Vorrichtung 1) in etwa auf der Schwenkachse 3 liegt. Der Schwerpunkt S des Gesamtsystems liegt notwendigerweise auf einer Vertikalen 20 durch den Aufhängpunkt 2, wobei dieser Aufhängpunkt wiederum so positioniert ist, daß dabei die Schwenkachse 3 mit der Vertikalen 20 einen Winkel von 45° einschließt. Diese jeweils speziell für einen Bremsentyp anzupassenden Positionen von Aufnahmebolzen 5, bzw. dessen Anschlag zur Aufnahme der Bremse 30 und Aufhängpunkt 2 sorgen dafür, daß die Bremse 30 mit sehr geringem Kraftaufwand und ohne nennenswerte Taumel- oder Schwingungsbewegungen von der Position gemäß Figur 4 in die der Figur 5 und umgekehrt gedreht werden kann.

Für Zwecke der ursprünglichen Offenbarung wird darauf hingewiesen, daß sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

## Patentansprüche

1. Vorrichtung zur Handhabung von Flugzeugbremsen, wobei die Vorrichtung aufweist:
einen Ausleger (1) mit mindestens einem Aufhängpunkt (2) und einer um eine Schwenkachse (3) drehbaren und sich von dem Ausleger (1) weg erstreckenden Welle (4),
einen an der Welle (4) befestigten und sich unter einem Winkel (α) von in etwa 45° relativ zur Schwenkachse (3) erstreckenden Aufnahmebolzen (5) für die Aufnahme in einer Bohrung einer Flugzeugbremse,
eine Fixiereinrichtung (6), welche an dem Aufnahmebolzen (5) festgelegt ist für eine relativ zum Aufnahmebolzen (5) verdrehsichere Halterung der an dem Aufnahmebolzen (5) aufgehängten Flugzeugbremse,
wobei der Ausleger (1) derart ausgestaltet und die Welle (4) relativ zu dem mindestens einen Aufhängpunkt (2) an dem Ausleger (1) derart positioniert ist, daß bei einer über den Aufnahmebolzen (5) und die Welle (4) an dem Ausleger (1) frei aufgehängten Flugzeugbremse sich die Schwenkachse (3) der Welle (4) unter einem Winkel (β) von in etwa 45° relativ zu einer Vertikalen (20) erstreckt, **dadurch gekennzeichnet, daß** der Aufnahmebolzen (5) lösbar und austauschbar an der Welle (4) befestigt ist.

2. Vorrichtung nach Anspruch 1, **dadurch gekennzeichnet, daß** die den Aufnahmebolzen aufnehmende Bohrung eine Bremsensicherungsbohrung ist.

3. Vorrichtung nach Anspruch 1 oder 2, **dadurch gekennzeichnet, daß** am freien Ende des Aufnahmebolzens (5) eine den Bolzen umfassende Sicherungshülse (7) mit Querstift (8) vorgesehen ist.

4. Vorrichtung nach einem der Ansprüche 1 bis 3, **dadurch gekennzeichnet, daß** an der Welle (4) eine Bolzenhalterung (10) mit einer Aussparung (11) für die Aufnahme und Sicherung einer dem freien Ende des Aufnahmebolzens (5) abgewandten Bolzenverlängerung (12) vorgesehen ist.

5. Vorrichtung nach Anspruch 4, **dadurch gekennzeichnet, daß** für die Sicherung des Aufnahmebolzens (5) an der Bolzenhalterung (10) ein sich durch miteinander fluchtende Bohrungen in einer Wand der Aussparung (11) und in der Bolzenverlängerung (12) erstreckender Querstift (18) vorgesehen ist.

6. Vorrichtung nach einem der Ansprüche 1 bis 5, **dadurch gekennzeichnet, daß** die Welle (4) in mindestens einer ihrer Drehpositionen fixierbar ist.

7. Vorrichtung nach Anspruch 6, **dadurch gekennzeichnet, daß** ein Fixierbolzen (13) vorgesehen ist, der durch eine Öffnung in der Wand einer die Welle (4) aufnehmenden Wellenbuchse (14) mit der Welle (4) in Fixiereingriff bringbar ist.

8. Vorrichtung nach Anspruch 7, **dadurch gekennzeichnet, daß** der Fixierbolzen (13) in einer an dem Ausleger (1) befestigten Fixierbolzenführung (5) gehaltert ist.

9. Vorrichtung nach einem der Ansprüche 1 bis 8, **dadurch gekennzeichnet, daß** die an dem Aufnahmebolzen (5) festgelegte Fixiereinrichtung (6) zur Fixierung der Flugzeugbremse an dem Aufnahmebolzen verstellbare Eingriffselemente für den Eingriff mit äußeren Elementen der Bremse aufweist.

10. Vorrichtung nach Anspruch 9, **dadurch gekennzeichnet, daß** die Fixiereinrichtung (6) eine Traverse (16) und an den Endabschnitten der Traverse (16) vorgesehene Verstellschrauben (17) aufweist, die auf äußere Bremsenelemente ausgerichtet sind.

11. Vorrichtung nach einem der Ansprüche 1 bis 10, **dadurch gekennzeichnet, daß** in dem Ausleger (1) eine Halteeinrichtung (21) für einen zweiten Aufnahmebolzen (5') vorgesehen ist, dessen Verlängerung (12') ebenfalls in die Aussparung (11) der Bolzenhalterung (10) paßt.

12. Vorrichtung nach Anspruch 11, **dadurch gekennzeichnet, daß** der zweite Bolzen (5') für die Aufnahme in einer anderen Bremssicherungsbohrung vorgesehen ist, deren Maße von denen der Bremssicherungsbohrung abweichen, für welche der erste Bolzen (5) vorgesehen ist.

13. Vorrichtung nach einem der Ansprüche 1 bis 12, **dadurch gekennzeichnet, daß** mindestens ein zweiter Aufhängpunkt an dem Ausleger (1) in einem zu dem mindestens einen ersten Aufhängpunkt (2) unterschiedlichen Abstand zu einer Vertikalen vorgesehen ist, die durch den Schnittpunkt der Schwenkachse (3) und der Achse des Aufnahmebolzens (5) verläuft.

14. Vorrichtung nach einem der Ansprüche 1 bis 13, **dadurch gekennzeichnet, daß** der Aufnahmebolzen (5) für eine Variation der Position der Bremse bezüglich der Schwenkachse und in Längsrichtung des Aufnahmebolzens ausgebildet ist.

15. Vorrichtung nach Anspruch 14, **dadurch gekennzeichnet, daß** die Position des Aufnahmebolzens (5) bzw. der Bremse auf dem Aufnahmebolzen (5) bezüglich der Schwenkachse (3) und gesehen in Längsrichtung des Aufnahmebolzens (5) derart einstellbar ist , daß der Schwerpunkt aller relativ zu dem Ausleger (1) um die Schwenkachse (3) drehbaren Komponenten, einschließlich Bremse, Aufnahmebolzen und Fixiereinrichtung, in etwa auf der Schwenkachse (3) liegt.
